# EUROPEAN PATENT APPLICATION

(11) **EP 2 180 575 A1**
(43) Date of publication of application: **28.04.2010**
(21) Application number: 08167175.2
(22) Date of filing: 21.10.2008
(51) Int. Cl.: H02J 7/32, H04M 1/02

(54) **Portable communication device**

(71) Applicant: SCI Innovations Limited, 1096 Nicosia (CY); Schnyder Rolf W., 59100 Kuala Lumpur (MY)
(72) Inventor: Schnyder, Rolf W., 59100 Kuala Lumpur (MY); Morton, Nielsen, 33160 Sunny Isles Beach (US)
(74) Representative: BOVARD AG

(57) **Abstract**

Presented and claimed is a portable device for communication, in particular a mobile telephone, in which emergency operation with transmitting and receiving is possible even with empty rechargeable battery.

For this purpose, in addition to a main rechargeable battery (14), which is provided and designed for normal operation and is charged by a separate charging device at a power outlet, the device (10) has an emergency rechargeable battery (16), which is charged by an integrated electromechanical generator (22). This generator, which supplies electricity during movement of the device, is an unbalance rotation generator (22), known per se, or a linear generator. During emergency operation, the main battery (14) is not connected to the electronics (12) of the device, and the limited functions of the device necessary for the emergency operation are supplied with current by the emergency rechargeable battery (16). In addition, a switch (32), able to be actuated from outside or automatically, is built in.

The device according to the invention proves valuable especially in situations where an emergency call must be enabled by all means and where an interactive operation is necessary.

## Description

This invention relates to a portable communication device, in particular a mobile telephone which is equipped with an autonomous power source.

In the following, the portable communication device, which is the subject matter of the present patent application, will be designated as mobile telephone. Understood by this designation, however, should also be other communication devices containing autonomous power sources and enabling wireless communication, such as walkie-talkies, iPods (of the company Apple), smartphones and portable calling devices.

Known mobile telephones have as power source a rechargeable battery located in the housing, which rechargeable battery has to be charged from time to time with the aid of an external power source. The original nickel-metal hydride rechargeable batteries have been replaced in the meantime by lithium-ion rechargeable batteries.

Batteries for mobile telephones represent a compromise between opposing demands. On the one hand, they are supposed to supply current as long as possible, and, on the other hand, they are supposed to be small and lightweight so that they may be accommodated in the limited housing dimensions of the mobile telephone. A typical rechargeable battery in a mobile telephone today has a life (duration of supply of operating voltage in standby mode) of about 120 hours and a duration of operation (with telephone operation) of about 5 hours. These values, which represent only approximations and are constantly being improved by designers, apply at room temperature and are lower at lower temperatures.

Despite these substantial power ratings, it happens relatively often that the rechargeable battery is empty when the telephone is needed for communication. Usually this is because the user has forgotten to load the device beforehand, even though all devices today are equipped with a display of the still available battery capacity. Admittedly, this display is imprecise because it is derived from the respective battery voltage, and this voltage does not begin to sink until toward the end of the charge, especially with lithium-ion rechargeable batteries.

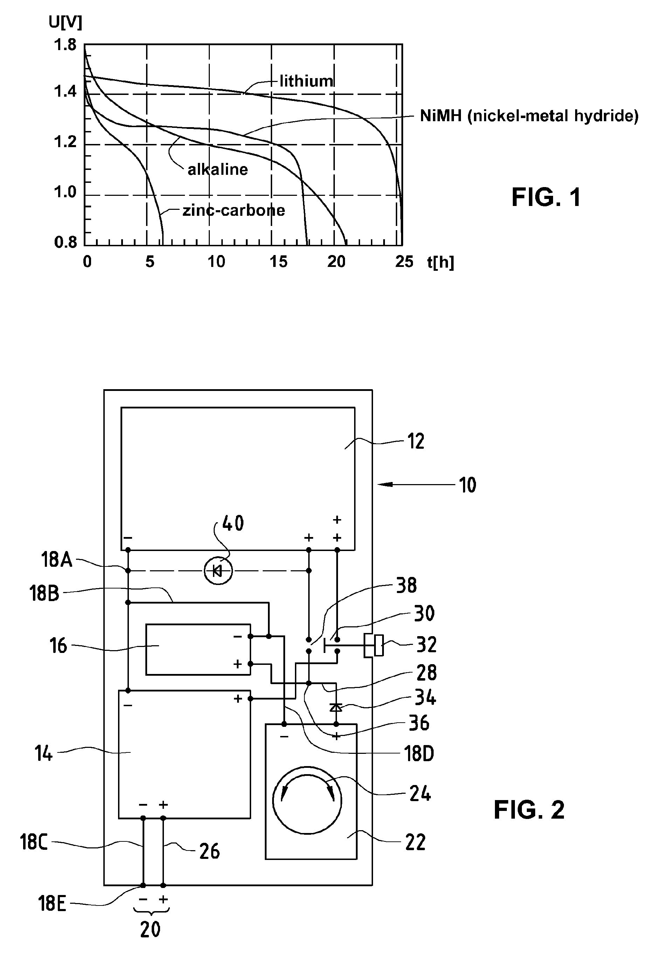

Concerning this subject, Figure 1 shows a discharge diagram for rechargeable batteries or other batteries with a constant current discharge at 120 mA for batteries with comparable charging capacity. While the terminal voltage of carbon-zinc rechargeable batteries and alkaline cells, as a first approximation, sinks linearly from 1.4 V to 0.8 V, NiMH and lithium-ion rechargeable batteries supply a practically constant voltage during the first 80 to 90% of the life, and the decline from 1.2 V or respectively 1.35 V to 0.8 V occurs only during the last 10 to 20% of the life. Thus it is no wonder that, as a rule, a rechargeable battery warning comes too late to be able to recharge the rechargeable battery.

This apparent drawback of known mobile telephones - which is also, by the way, to be found with such devices that are charged with solar cells - can be life-threatening in emergency situations. For example, the use of a mobile telephone whose rechargeable battery is empty is useless in emergencies in which the summoning of help is life-saving. With accidents in the mountains, such a device with empty rechargeable battery is also useless, even if, at the start, a sufficiently large amount of electricity is stored in the rechargeable battery, which is then quickly used up with repeated distress calls that are not received.

Disclosed in the German utility model No. DE 20 2005 008 566 U1 is the automatic recharging of a cell phone rechargeable battery; the technical problem of the invention and its solution are neither described nor hinted at, however.

It is therefore an object of the present invention to create a mobile telephone that remains available for distress calls even with empty rechargeable battery, multiple calls extending over long periods of time also being possible. Understood by "emergency calls" and "calls" are not just simple, merely transmitted messages, but full-fledged, interactive calls with a connection partner.

This object is achieved by the invention as defined in the independent claim. Special embodiments of the inventive subject matter form the subject matter of the dependent claims.

The nature of the emergency rechargeable battery available is not critical. It can be a miniaturized version of the main rechargeable battery, i.e. of the first rechargeable battery, that is a NiMH or lithium-ion rechargeable battery, but it can also be a supercapacitor (known per se), i.e. a double-layer capacitor, which distinguishes itself by a high energy density.

In general, the size of the emergency rechargeable battery should be selected such that its functioning is ensured without it taking up too much room in the device. Since it can be continuously recharged during operation, a size representing 10 to 20% of the main rechargeable battery suffices, as a rule, expressed as energy density value (Wh/g).

The built-in generator for charging the emergency rechargeable battery is mechanically driven, when the device is moved. It is preferably disposed as far from the centre of the device as possible so that during its involuntary movement as great an amplitude as possible is achieved. Used as the mechanical part of the generator can be a self-winding mechanism, which is known as part of automatic mechanical watches in which the spring is wound in little steps by a rotor during arm movements of the wearer. The rotor, which usually has ball bearings, stands still during movements of the watchcase, owing to its inertia and the force of gravity. A torque is hereby exerted on the winding mechanism. The spring is typically wound in both rotational directions (bidirectionally). If the rotational movement of the case lies in the axis of the rotor, then the principle is based alone on the moment of inertia of the rotor. In the case of rotational movements perpendicular to the axis of the rotor, the eccentricity thereof has an effect: The rotor is usually of only semicircular shape; thus its centre of gravity does not coincide with its axis. If the watch is turned only slightly out of the horizontal, this possibly suffices for a 180-degree rotation of the rotor.

This technology known from watchmaking may be converted into a mechanically operated charging device for an emergency rechargeable battery by adding a generator, preferably composed of coil, permanent magnet and commutator rectifier. Details of a charging generator constructed in this way will not be given here; one skilled in the art, with his knowledge and skill, is able to construct such a generator, which is used in principle, by the way, in the so-called automatic quartz watches (Seiko Kinetik, ETA Autoquarz).

Another possibility for a mechanically operated charging generator can be learned from the U.S. patent specification No. 6,220,719 B1 and the U.S. patent application No. US 2003/0197433 A1; involved are electromotive linear generators, in which at least one permanent magnet can move linearly in both directions inside at least one coil. With this movement, current is produced according to the Faraday principle.

As a preferred additional measure, the invention provides for covering the electromechanical charging generator for the emergency rechargeable battery with a transparent material, whereby it becomes visible from outside and its proper functioning can be visually monitored.

The inner circuitry for the rechargeable batteries in the mobile telephone can be achieved in such a way that, with attachment of an outer charging source, both rechargeable batteries are charged in series, or only just the main rechargeable battery. Moreover a switch, operable from outside, can be provided, which switches on and off the emergency operation of the mobile telephone with the emergency rechargeable battery.

The invention will now be explained more closely using an embodiment example. This example is given only for better comprehension, in a way non-limiting for the invention.

Reference is made to the drawing in which

Figure 2 shows a schematic view of the inside of a mobile telephone according to the invention.

The mobile telephone 10 of Figure 2 has the usual components, namely a keypad, an antenna, a display screen, a slot for a SIM card, a microphone, a loudspeaker, etc. All these parts are not shown in Figure 2.

Referring to Figure 2, electronics 12, including all circuitry elements necessary for operation of the telephone, are integrated at the appropriate place in the telephone apparatus. Shown furthermore are a main rechargeable battery 14 and an emergency rechargeable battery 16. The lines 18A to 18D connect the minus pole of the two rechargeable batteries 14 and 16 to the minus pole of the electronics 12 and the minus pole 18E of the charging socket 20, with the aid of which the main rechargeable battery 14 can be charged by an external charging device (not shown).

Disposed in the lower right-hand corner region of the telephone apparatus 10 as shown in Figure 2 is the electromechanical generator 22 for charging the emergency rechargeable battery 16. Of course any other desired installation location may be chosen. The generator 22 is shown schematically in Figure 2 as an unbalance rotation generator with an oscillating weight capable of rotation in the direction of the double arrow 24. (As mentioned above, a linear generator, for example, can also be used.)

As is common in mobile telephones, the main rechargeable battery 14 is connected via a line 18C, 26 to the charging connection 20, which enables the charging of the rechargeable battery 14 from outside by means of a charging device which is plugged into the connection 20. From the main rechargeable battery 14, a single-wired line 28 leads to a first contact level (switch level) 30 of a press switch 32, whose inoperative position corresponds to the position drawn, in which the first contact level 30 is connected to the ++ pole of the electronics 12. Assigned to this++ pole are all functions for which the telephone apparatus is designed, and which allow themselves also to be activated accordingly. This mode of operation, i.e. normal operation, also requires the most electricity.

The plus pole of the electromechanical generator 22 is connected, on the one hand, via a free-wheeling diode 34 and the line 36, to the plus pole of the emergency rechargeable battery 16, and, on the other hand, via the second switching level 38 of the press switch 32, to the + pole of the electronics 12. The emergency rechargeable battery can thereby be constantly charged when the device 10 is moved (whereby the electromechanical generator 22 supplies current), but it is not in connection with the telephone electronics 12.

When the switch 32 is pressed, in order to commence emergency operation of the mobile telephone when the main rechargeable battery 14 is empty, the main rechargeable battery is separated from the ++ pole of the electronics 12, by opening the contacts 30, and instead the emergency rechargeable battery is connected to the + pole of the electronics 12 via the closed contacts 38. In the electronics 12, lying at the + pole are only those functions that are necessary for emergency operation, and superfluous functions are switched off. The electronics therefore use less electricity, and the emergency rechargeable battery can maintain the emergency operation for longer.

It is possible to provide the press switch 32 with a lock-in function so that the emergency operation is switched on continuously. In this case, a display of the switched-on emergency operation is preferred, for instance through a miniature LED (indicated by broken lines in Figure 2 without a possibly needed current-limiting resistor, and designated by 40), so that the switching off of the emergency operation is not forgotten.

During emergency operation it is possible, through constant movement of the device 10, to maintain the charging state of the emergency rechargeable battery 16 and to prolong the call duration.

The invention has been explained by describing an embodiment example of the inventive subject matter. The scope is not thereby limited. Instead numerous additions, changes and further developments are possible in the context of the claimed subject matter. For example, instead of the switch 32 or in addition to this switch, emergency operation can be automatically switched on (and switched off again) by dialling an emergency number of the electronics 12; however, such a possibility requires sufficient residual charge in the main rechargeable battery. Furthermore, a display of the charged state of the emergency rechargeable battery can also be provided on the display of the device, besides the already existing display of the amount of charge in the main rechargeable battery.

## Claims

1. Portable communication device (10), which is equipped with a first rechargeable battery (14), which makes possible operation of the device independently of the power supply network, **characterized in that** it is further equipped with an emergency rechargeable battery (16), which is charged by an electromechanical generator (22) that supplies current during movement of the device, and **in that** the emergency rechargeable battery (16) makes possible emergency operation of the device even with insufficiently charged first rechargeable battery (14).

2. Device according to claim 1, **characterized in that** the charging capacity of the emergency rechargeable battery (16) corresponds to 10 to 20% of that of the first rechargeable battery (14).

3. Device according to claim 1 or 2, **characterized in that** the electromechanical generator (22) is an unbalance rotation generator in which an asymmetrically hung, rotationally capable, oscillating weight drives an electrical generator with coil and permanent magnet when the oscillating weight is set in rotation during movement of the device.

4. Device according to claim 1 or 2, **characterized in that** the electromechanical generator (22) is a linear generator in which a permanent magnet carries out a linear motion inside a coil when the device is correspondingly moved.

5. Device according to one of the preceding claims, **characterized in that** the electromechanical generator is visible from outside **in that** it is situated under a transparent cover.

6. Device according to one of the preceding claims, **characterized in that** a switch (32) is provided with which the device is switchable from normal operation into emergency operation, whereby the switch (32) in inoperative position activates the normal operation.

7. Device according to one of the preceding claims, **characterized in that** in emergency operation only those functions are supported that are necessary for this emergency operation.

8. Device according to one of the preceding claims, **characterized in that** switched-on emergency operation is indicated on a display, in particular by means of an LED (40).

9. Device according to claim 8, **characterized in that** the state of charge of the emergency rechargeable battery is shown on the display of the device.

10. Device according to one of the preceding claims, **characterized in that** the emergency rechargeable battery (16) is chargeable simultaneously with the first rechargeable battery (14), when the device is connected to an external charging device.

11. Device according to one or more of the preceding claims, **characterized in that** the device is a mobile telephone.
